# EUROPEAN PATENT SPECIFICATION

(11) **EP 4 518 275 B1**
(45) Date of publication and mention of the grant of the patent: **09.09.2026**
(21) Application number: 22948005.8
(22) Date of filing: 23.06.2022
(51) Int. Cl.: H04L 43/04, G06N 3/044, G06N 3/045, G06N 3/047, G06N 3/08, G06N 5/01, G06N 7/01, G06N 20/10, G06N 20/20, H04L 41/069, G06N 20/00, G06N 3/084, G06N 3/088, G06F 21/55, H04L 41/16, H04L 9/40, H04L 41/142

(54) **LEARNING DEVICE, LEARNING METHOD, AND LEARNING PROGRAM**
LERNVORRICHTUNG, LERNVERFAHREN UND LERNPROGRAMM
DISPOSITIF D'APPRENTISSAGE, PROCÉDÉ D'APPRENTISSAGE, ET PROGRAMME D'APPRENTISSAGE

(43) Date of publication of application: 05.03.2025
(73) Proprietor: NTT, Inc., Tokyo 100-8116 (JP)
(72) Inventor: NAGAI, Tomohiro, Musashino-shi, Tokyo 180-8585 (JP); FUJIKI, Naoto, Musashino-shi, Tokyo 180-8585 (JP)
(74) Representative: Hoffmann Eitle
(86) International application number: PCT/JP2022/025194
(87) International publication number: WO 2023/248444

(56) References cited:
- EP-A1- 3 979 085
- WO-A1-2020/027250
- JP-A- 2021 140 739
- US-A1- 2021 306 351
- US-B1- 10 529 101
- YAN-PING ZHANG ET AL: "Cluster-based majority under-sampling approaches for class imbalance learning", INFORMATION AND FINANCIAL ENGINEERING (ICIFE), 2010 2ND IEEE INTERNATIONAL CONFERENCE ON, IEEE, PISCATAWAY, NJ, USA, 17 September 2010 (2010-09-17), pages 400 - 404, XP031780510, ISBN: 978-1-4244-6927-7
- JAIN MEENAL ET AL: "A K-Means clustering and SVM based hybrid concept drift detection technique for network anomaly detection", EXPERT SYSTEMS WITH APPLICATIONS, ELSEVIER, AMSTERDAM, NL, vol. 193, 8 January 2022 (2022-01-08), XP086960884, ISSN: 0957-4174, [retrieved on 20220108], DOI: 10.1016/J.ESWA.2022.116510

## Description

### Technical Field

The present invention relates to a learning device, a learning method, and a learning program.

### Background Art

An anomaly detection technology using unsupervised machine learning enables detection of a new type of cyberattack with high accuracy, and introduction of the technology into society is expected to be promoted. Here, in an anomaly detector using unsupervised machine learning, communication that is actually normal communication may be detected as abnormal communication and an alert (over-detection alert) may be issued. This over-detection alert makes investigation of alerts difficult and hinders operation of the anomaly detector. Therefore, in order to reduce over-detection by the anomaly detector, it is necessary to perform additional learning (over-detection feedback) for the fact that the communication for which the over-detection alert was issued is actually normal communication.

### Citation List

### Patent Literature

Patent Literature 1: JP 2019-220866 A
Patent Literature 2: EP 397 9085 A1 describes a learning apparatus that estimates the probability density of normal communication data to improve anomaly detection accuracy. A first estimation unit performs initial learning, a clustering unit clusters normal data according to the estimated probability density, and a second estimation unit performs learning for each cluster using the first-stage parameters as initial values.
Patent Literature 3: US 1052 9101 B1 describes a system that presents events detected by a monitoring system. An event identifier clusters monitoring data such as motion-sensor and video data-associated with the same event. From each cluster, a representative piece of monitoring data is selected for display.

### Summary of Invention

### Technical Problem

However, using a large number of over-detection alerts for over-detection feedback may cause the operation of the anomaly detector to become unstable, such as a prolonged time for learning by the anomaly detector or occurrence of overfitting. It is therefore important to select an over-detection alert used for the over-detection feedback so that the operation of the anomaly detector does not become unstable. However, in a conventional technology, it has not been studied to select an over-detection alert used for over-detection feedback so that the operation of the anomaly detector does not become unstable.

It is therefore an object of the present invention to solve the above-described problem and to select an over-detection alert used for over-detection feedback so that an operation of an anomaly detector does not become unstable.

### Solution to Problem

the above problem is solved by the subject matter of the independent claims. Advantageous embodiments of the invention are disclosed in the dependent claims. According to an example there is provided an acquisition unit that acquires communication feature values of communication over-detected in an anomaly detector that detects an anomaly in communication; a clustering unit that clusters the acquired communication feature values into a plurality of clusters; a sampling unit that sorts, for each of the clusters, communication feature values belonging to the cluster in time series, specifies a period of the sorted communication feature values, and samples the communication feature values with the specified period; and a learning unit that performs additional learning for over-detection feedback on the anomaly detector by using the communication feature values sampled from each of the clusters.

### Advantageous Effects of Invention

According to the present invention, an over-detection alert used for over-detection feedback can be selected so that the operation of the anomaly detector does not become unstable.

### Brief Description of Drawings

Fig. 1 is a diagram for illustrating an overview of a learning device.
Fig. 2 is a diagram illustrating a configuration example of the learning device.
Fig. 3 is a diagram illustrating an example of feature value names constituting communication feature values associated with an over-detection alert.
Fig. 4 is a flowchart illustrating an example of a processing procedure executed by the learning device.
Fig. 5 is a diagram illustrating a result of AUC of an anomaly detector of a comparative example and a result of AUC of an anomaly detector for which over-detection feedback has been performed by the learning device.
Fig. 6 is a diagram illustrating accuracy (AUC score) and learning time of each of the anomaly detector of the comparative example and the anomaly detector for which over-detection feedback has been performed by the learning device.
Fig. 7 is a diagram illustrating a computer that executes a learning program.

### Description of Embodiments

Hereinafter, a mode for carrying out the present invention (embodiment) will be described with reference to the drawings. The present invention is not limited to the embodiment described below.

### [Overview]

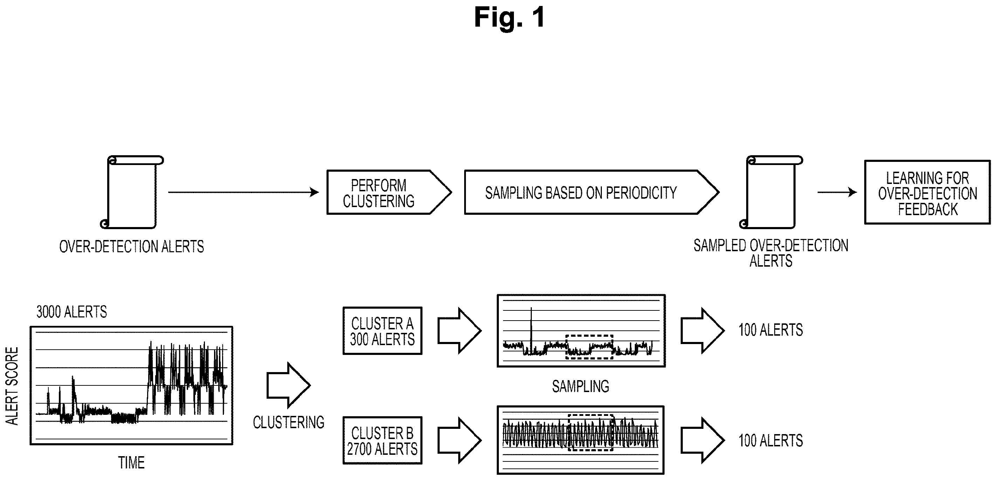

First, an overview of a learning device according to the present embodiment will be described with reference to Fig. 1. The learning device performs over-detection feedback for an anomaly detector (a device for detecting an anomaly in communication on the basis of a pre-learned machine learning model).

First, the learning device acquires over-detection alert groups of the anomaly detector. Then, the learning device clusters similar over-detection alert groups. For example, in a case where 3000 over-detection alert groups have been acquired, the learning device clusters the over-detection alert groups into Cluster A (300 groups) and Cluster B (2700 groups) on the basis of a Gaussian Mixture Model.

Next, the learning device sorts, for each cluster, the over-detection alert groups in time series, and specifies a periodicity of the over-detection alerts. Then, the learning device samples, for each cluster, the over-detection alerts at intervals of the specified period.

For example, the learning device samples 100 over-detection alerts from Cluster A and samples 100 over-detection alerts from Cluster B. Then, the learning device uses the sampled over-detection alert groups to perform learning for over-detection feedback for the anomaly detector.

In this manner, the learning device clusters over-detection alert groups, samples the over-detection alerts on the basis of the periodicity of the over-detection alerts in each cluster, and performs over-detection feedback. Thus, the learning device can use over-detection alerts that are exhaustive and balanced to perform over-detection feedback for the anomaly detector. As a result, the learning device can perform over-detection feedback in a short time without reduction in accuracy of the anomaly detector.

### [Configuration Example]

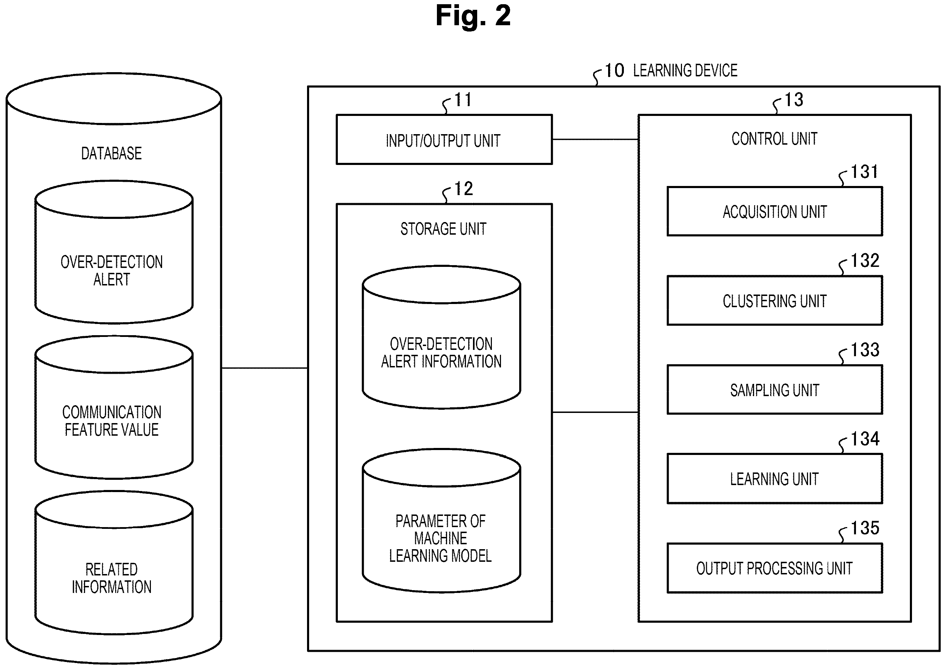

Next, a configuration example of a learning device 10 will be described with reference to Fig. 2. The learning device 10 includes an input/output unit 11, a storage unit 12, and a control unit 13.

### [Input/Output Unit]

The input/output unit 11 serves as an interface for the learning device 10 to receive an input of and output various types of information. For example, the input/output unit 11 receives, from an external database, inputs of an over-detection alert, a communication feature value associated with the over-detection alert, and information related to the communication feature value (e.g., ID of the communication feature value and reception time). In addition, the input/output unit 11 outputs a result of processing by the control unit 13. For example, the input/output unit 11 outputs the number of communication feature values used for over-detection feedback in the control unit 13, the IDs of the communication feature values, and the like.

### [Storage Unit]

The storage unit 12 stores various types of information and programs used when the control unit 13 operates, and various types of information obtained as a result of the operation of the control unit 13. Here, the storage unit 12 is, for example, a semiconductor memory element such as a random access memory (RAM) or a flash memory, or a storage device such as a hard disk or an optical disk.

The storage unit 12 stores, for example, an over-detection alert, a communication feature value associated with the over-detection alert, and information related to the communication feature value (these are collectively referred to as over-detection alert information) input via the input/output unit 11. In addition, the storage unit 12 stores parameters of the machine learning model used by the anomaly detector for which the over-detection feedback is to be performed. This machine learning model is, for example, a model that determines whether communication that has been input is abnormal and outputs a result of the determination. The parameters of the machine learning model are updated by the control unit 13 executing learning for over-detection feedback.

### [Control Unit]

The control unit 13 controls the entire learning device 10. The control unit 13 includes an acquisition unit 131, a clustering unit 132, a sampling unit 133, a learning unit 134, and an output processing unit 135. The function of each unit of the control unit 13 is implemented by a CPU equipped in the learning device 10 executing a program stored in the storage unit 12.

### [Acquisition Unit]

The acquisition unit 131 acquires an over-detection alert group of the anomaly detector. For example, the acquisition unit 131 acquires, from an external database, an over-detection alert group issued from the same device (anomaly detector). The device is identified by using, for example, a source IP address or a source MAC address of the over-detection alert.

In addition, the acquisition unit 131 acquires, from the database, communication feature values associated with the over-detection alert and the information related to the communication feature values (e.g., IDs of the communication feature values and reception times). The above-described communication feature values are feature values of traffic communication data for which an over-detection alert is to be issued.

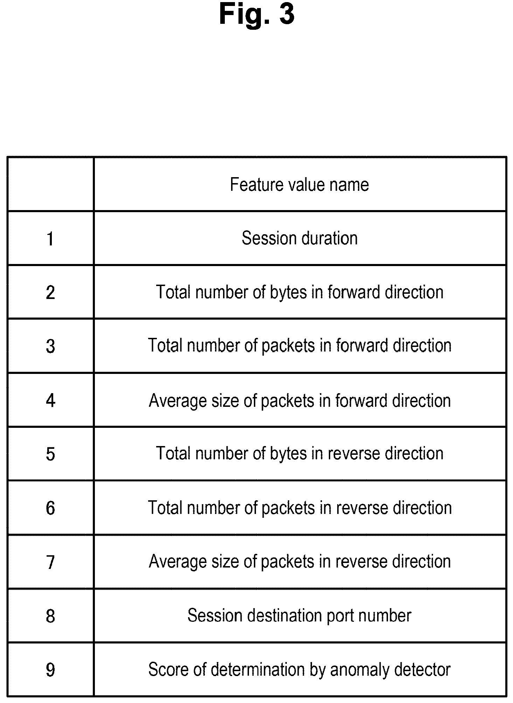

The communication feature values include, for example, feature values illustrated in Fig. 3. That is, the communication feature values include feature values such as a session duration of communication, a total number of bytes in a forward direction, a total number of packets in a forward direction, an average size of packets in a forward direction, a total number of bytes in a reverse direction, a total number of packets in a reverse direction, an average size of packets in a reverse direction, a session destination port number, and a score of determination by the anomaly detector.

### [Clustering Unit]

The description will now return to Fig. 2. The clustering unit 132 clusters the communication feature values associated with the over-detection alert acquired by the acquisition unit 131 into a plurality of clusters.

For example, the clustering unit 132 uses the Gaussian Mixture Model to cluster the communication feature values acquired by the acquisition unit 131 so that similar communication feature values belong to the same cluster.

At this time, for example, in order to determine the number of clusters, the clustering unit 132 first performs clustering so as to generate 1 to 10 clusters. Then, the clustering unit 132 determines the most appropriate number of clusters from 1 to 10 on the basis of the Bayesian information criterion. Note that a variance type, which is a parameter of the Gaussian mixture model described above, is the same for each cluster.

The method of clustering is not limited to the method using the Gaussian mixture model described above as long as similar data (communication feature values) belongs to each cluster and the data in the cluster is balanced as much as possible.

### [Sampling Unit]

The sampling unit 133 samples the communication feature values from each cluster. For example, the sampling unit 133 sorts, for each cluster, communication feature value groups belonging to the cluster in time series. Then, the sampling unit 133 specifies, for each cluster, the period of the communication feature value groups belonging to the cluster, and samples the communication feature values with the specified period. In a case where the period of the communication feature value groups belonging to the cluster cannot be specified, the sampling unit 133 randomly samples the communication feature values from the cluster.

As a specific example, the sampling unit 133 acquires, for each cluster, data (communication feature values) belonging to the cluster and its related information. Then, the sampling unit 133 sorts the communication feature values belonging to each cluster in time series on the basis of the reception time indicated by the acquired related information.

Next, the sampling unit 133 calculates an autocorrelation coefficient from the sorted communication feature values in the cluster. Lags as parameters of the autocorrelation coefficient are in a range from 1 to the number of pieces of data belonging to the cluster. Then, the sampling unit 133 specifies, among the lugs, a lug in which the autocorrelation coefficient becomes the maximum value, as the period of the data of the cluster (the number of pieces of period data). Thereafter, the sampling unit 133 samples a communication feature value for each specified period from the sorted communication feature values in the cluster. The sampling unit 133 executes the processing described above on each cluster.

For example, the sampling unit 133 receives an input of a sampling number N of each cluster from a user of the learning device 10. Then, the sampling unit 133 samples, for each cluster, the communication feature values for each period (the number of pieces of period data) in order from the communication feature value at the oldest time until the sampling number N is satisfied. Then, the sampling unit 133 records the IDs of the sampled communication feature values in a learning list.

In a case where the maximum value of the autocorrelation coefficient of the communication feature values in the cluster is less than a predetermined threshold, the sampling unit 133 determines that the period of the communication feature values of the cluster cannot be specified (there is no periodicity). Then, the sampling unit 133 randomly samples N data communication feature values from the cluster. Then, the sampling unit 133 records the IDs of the randomly sampled communication feature values in the learning list.

The learning unit 134 uses the communication feature values sampled by the sampling unit 133 to perform learning for over-detection feedback for the anomaly detector.

For example, the learning unit 134 acquires communication feature values associated with an over-detection alert from the storage unit 12 on the basis of the IDs of the communication feature values indicated in the learning list described above. Then, using the acquired communication feature values as learning data of normal communication, the learning unit 134 performs additional learning of the machine learning model used by the anomaly detector and updates the parameters of the machine learning model.

The output processing unit 135 outputs a result of processing by the control unit 13 via the input/output unit 11. For example, the output processing unit 135 outputs the number of communication feature values used for over-detection feedback for the anomaly detector, the IDs of the communication feature values, the time required for the over-detection feedback, and the like.

The learning device 10 as described above can perform over-detection feedback in a short time without reduction in accuracy of the anomaly detector. As a result, the learning device 10 can stably operate the anomaly detector.

### [Example of Processing Procedure]

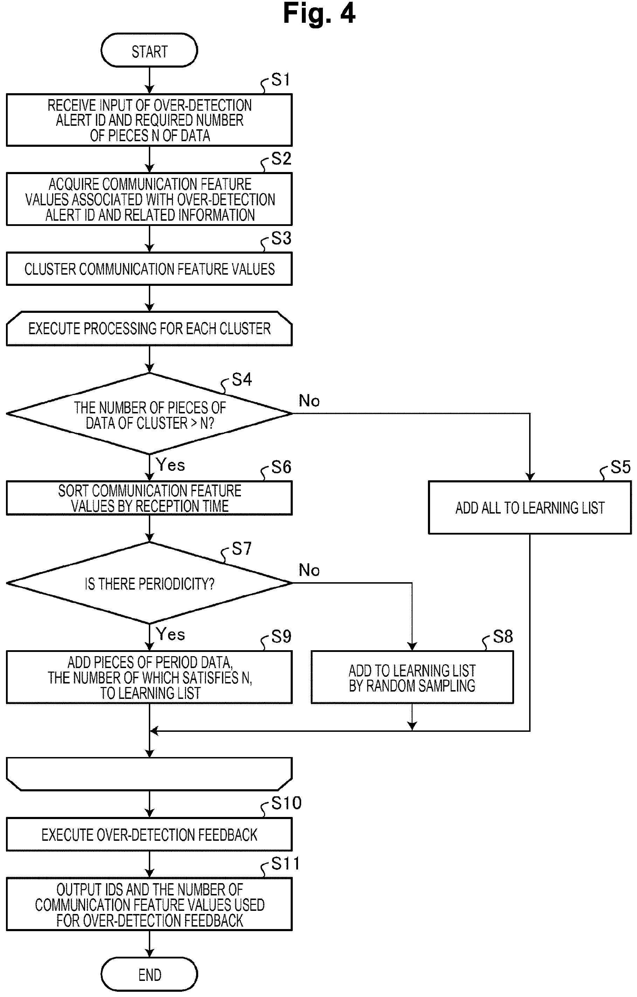

Next, an example of a processing procedure of the learning device 10 will be described with reference to Fig. 4. For example, the learning device 10 receives an input of an over-detection alert ID and the required number of pieces N of data (the number of pieces of sampling data per cluster) (S1). Thereafter, the acquisition unit 131 acquires, from the database, communication feature values associated with the over-detection alert ID received in S1 and related information (e.g., reception times of the communication feature values) (S2). Then, the clustering unit 132 clusters the communication feature values acquired in S2 (S3).

Thereafter, the sampling unit 133 executes processing of S4 to S9 described below for each cluster generated by the clustering in S3. First, the sampling unit 133 determines whether the number of pieces of data (communication feature values) of the cluster generated in S3 exceeds N (S4), and if it is determined that the number exceeds N (Yes in S4), the communication feature values in the cluster are sorted by reception time (S6).

After S6, the sampling unit 133 determines whether the communication feature values in the cluster have a periodicity (S7), and if it is determined that the communication feature values have a periodicity (Yes in S7), pieces of period data, the number of which satisfies N described above, are added to a learning list (S9). For example, the sampling unit 133 specifies the period of the sorted communication feature value groups in the cluster, and then samples the communication feature values for each specified period. Then, the sampling unit 133 adds the IDs of the sampled communication feature values to the learning list.

If it is determined in S4 that the number of pieces of data of the cluster generated in S3 does not exceed N (No in S4), the sampling unit 133 adds the IDs of all the communication feature values of the cluster to the learning list (S5: add all to learning list). Thereafter, the processing proceeds to the next cluster.

In S7, in a case where the sampling unit 133 determines that there is no periodicity in the communication feature values in the cluster (No in S7), the sampling unit adds, to the learning list, the IDs of the communication feature values randomly sampled from the communication feature values of the cluster (S8: add to learning list by random sampling). Thereafter, the processing proceeds to the next cluster.

After the sampling unit 133 has executed the processing of S4 to S9 on all the clusters, the learning unit 134 executes over-detection feedback on the anomaly detector by using the communication feature values of the IDs on the learning list (S10). For example, the learning unit 134 uses the communication feature values of the IDs on the learning list to perform additional learning for over-detection feedback on the machine learning model used by the anomaly detector. Thereafter, the output processing unit 135 outputs the IDs, the number, and the like of the communication feature values used for the over-detection feedback (S11).

The learning device 10 executes the processing described above, and thus it is possible to perform over-detection feedback in a short time without reduction in accuracy of the anomaly detector. As a result, the learning device 10 can stably operate the anomaly detector.

Note that the learning device 10 may perform only sampling of the communication feature values used for over-detection feedback, and the over-detection feedback using the communication feature values may be executed by another device. In this case, the learning device 10 outputs the sampled communication feature values to the device. Then, the device uses the communication feature values output from the learning device 10 to perform over-detection feedback.

The learning device 10 may further include a detection unit that uses the machine learning model after the over-detection feedback to detect an anomaly in communication that has been input.

### [Evaluation Result]

Next, a result of an experiment for evaluating the accuracy and learning time of an anomaly detector (machine learning model) for which over-detection feedback has been performed by the learning device 10 of the present embodiment will be described.

### [Experimental Conditions]

Experimental conditions are as follows.
- Initial learning of the anomaly detector has been sufficiently performed.
- A new communication is input to the anomaly detector, and an over-detection alert is generated. The new communication to be input is communication of two types of communication protocols.
- A comparative example is an anomaly detector for which over-detection feedback has been performed using over-detection alerts (2000 alerts).
- The learning device 10 of the present embodiment has performed over-detection feedback for the anomaly detector using over-detection alerts (600 alerts) sampled from the over-detection alerts (2000 alerts).
- Evaluation data includes data of normal communication (350 pieces) and data of abnormal communication (350 pieces). This evaluation data is used for evaluation of the accuracy (AUC score) and the learning time for each of the anomaly detector of the comparative example and the anomaly detector for which over-detection feedback has been performed by the learning device 10 of the present embodiment.
- The machine used for the anomaly detector is a terminal on VMware Esxi, and has a CPU of 16 vCPU and a memory of 32 GB.

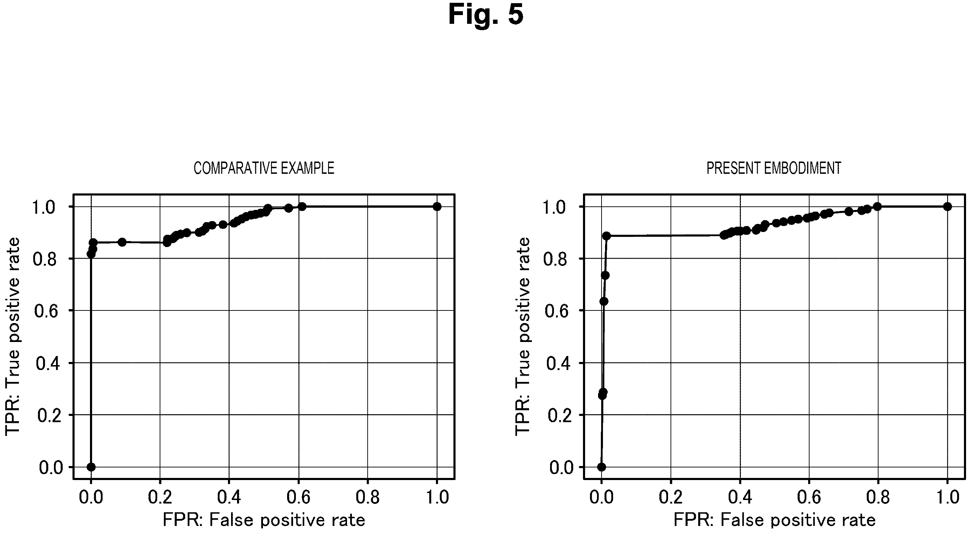

The results of the AUC of each of the anomaly detector of the comparative example and the anomaly detector for which over-detection feedback has been performed by the learning device 10 of the present embodiment are as illustrated in Fig. 5.

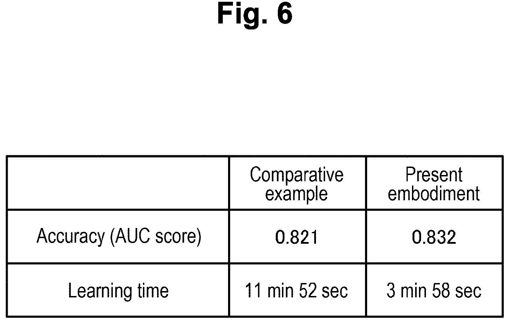

As illustrated in Fig. 6, the anomaly detector for which over-detection feedback has been performed by the learning device 10 of the present embodiment had an accuracy (AUC score) higher by 0.011 than the anomaly detector of the comparative example. In addition, according to the learning device 10 of the present embodiment, it has been confirmed that the time required for over-detection feedback (learning time) is shortened by 7 min 54 sec as compared with the comparative example. That is, according to the learning device 10 of the present embodiment, it has been confirmed that over-detection feedback can be performed at high speed without reduction in accuracy of the anomaly detector.

### [System Configuration and Others]

In addition, each of components of the units illustrated in the drawings is functionally conceptual and does not necessarily need to be physically configured as illustrated in the drawings. That is, specific forms of distribution and integration of devices are not limited to the illustrated forms, and all or some of the devices can be functionally or physically distributed or integrated in any unit according to various loads, usage conditions, and the like. Further, all or some of the processing functions performed in each device can be implemented by a CPU and a program executed by the CPU, or can be implemented as hardware by wired logic.

Of the pieces of processing described in the above-described embodiment, all or some of the pieces of processing described as being automatically performed may be manually performed, or all or some of the pieces of processing described as being manually performed may be automatically performed by a known method. The processing procedures, control procedures, specific names, and information including various types of data and parameters described above in the specification and drawings can be optionally changed unless otherwise mentioned.

### [Program]

The foregoing learning device 10 can be implemented by installing a program (learning program) in a desired computer as package software or online software. For example, an information processing device can be caused to function as the learning device 10 by causing the information processing device to execute the above program. Here, the information processing device also includes mobile communication terminals such as a smartphone, a mobile phone, and a personal handyphone system (PHS) and terminals such as a personal digital assistant (PDA).

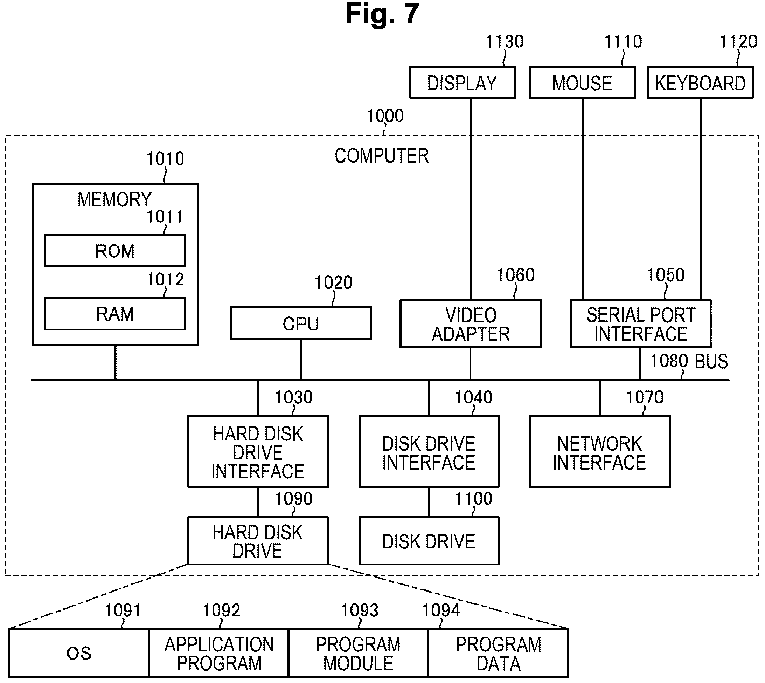

Fig. 7 is a diagram illustrating an example of a computer that executes the learning program. A computer 1000 includes, for example, a memory 1010 and a CPU 1020. The computer 1000 also includes a hard disk drive interface 1030, a disk drive interface 1040, a serial port interface 1050, a video adapter 1060, and a network interface 1070. These units are connected to each other via a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an OS 1091, an application program 1092, a program module 1093, and program data 1094. That is, a program that defines each piece of processing executed by the learning device 10 is implemented as the program module 1093 in which codes executable by the computer are described. The program module 1093 is stored in, for example, the hard disk drive 1090. For example, the program module 1093 for executing processing similar to that of the functional configuration in the learning device 10 is stored in the hard disk drive 1090. The hard disk drive 1090 may be replaced with a solid state drive (SSD).

Data to be used in the processing of the above embodiment is stored as the program data 1094 in, for example, the memory 1010 or the hard disk drive 1090. The CPU 1020 reads the program module 1093 and the program data 1094 stored in the memory 1010 and the hard disk drive 1090 into the RAM 1012 as necessary and executes the program module 1093 and the program data 1094.

The program module 1093 and the program data 1094 are not limited to being stored in the hard disk drive 1090, and may be stored in, for example, a removable storage medium and read by the CPU 1020 via the disk drive 1100 or the like. Alternatively, the program module 1093 and the program data 1094 may be stored in another computer connected via a network (local area network (LAN), wide area network (WAN), or the like). The program module 1093 and the program data 1094 may be read by the CPU 1020 from another computer via the network interface 1070.

### Reference Signs List

- 10: Learning device
- 11: Input/output unit
- 12: Storage unit
- 13: Control unit
- 131: Acquisition unit
- 132: Clustering unit
- 133: Sampling unit
- 134: Learning unit
- 135: Output processing unit

## Claims

1. A learning device (10) comprising:
an acquisition unit (131) that acquires communication feature values of communication over-detected in an anomaly detector that detects an anomaly in communication, wherein over-detected communication is communication that is normal communication which is detected as abnormal communication;
a clustering unit (132) that clusters the acquired communication feature values into a plurality of clusters;
a sampling unit (133) that sorts, for each of the clusters, communication feature values belonging to the cluster in time series, specifies a period of the sorted communication feature values, and samples the communication feature values with the specified period; and
a learning unit (134) that performs additional learning for over-detection feedback on the anomaly detector by using the communication feature values sampled from each of the clusters.

2. The learning device (10) according to claim **1,** wherein
the clustering unit (132) is configured to:
use a Gaussian Mixture Model to cluster the communication feature values into a plurality of clusters.

3. The learning device according to claim 1, wherein
the sampling unit (133) is configured to:
randomly sample the communication feature values from the communication feature values belonging to the cluster in a case where it has not been possible to specify the period of the communication feature values belonging to the cluster.

4. The learning device according to claim 1, wherein
the sampling unit (133) is configured to:
calculate an autocorrelation coefficient of each of the sorted communication feature values, and specify the period of the communication feature values on the basis of the calculated autocorrelation coefficient.

5. The learning device according to claim 1, further comprising:
a detection unit that uses the anomaly detector after additional learning to detect an anomaly in communication that has been input.

6. A learning method executed by a learning device (10), the learning method comprising:
a step of acquiring communication feature values of communication over-detected in an anomaly detector that detects an anomaly in communication, wherein over-detected communication is communication that is normal communication which is detected as abnormal communication;
a step of clustering the acquired communication feature values into a plurality of clusters;
a step of sorting, for each of the clusters, communication feature values belonging to the cluster in time series, specifying a period of the sorted communication feature values, and sampling the communication feature values with the specified period; and
a step of performing additional learning for over-detection feedback on the anomaly detector by using the communication feature values sampled from each of the clusters.

7. A learning program for causing a computer to execute:
a step of acquiring communication feature values of communication over-detected in an anomaly detector that detects an anomaly in communication, wherein over-detected communication is communication that is normal communication which is detected as abnormal communication;
a step of clustering the acquired communication feature values into a plurality of clusters;
a step of sorting, for each of the clusters, communication feature values belonging to the cluster in time series, specifying a period of the sorted communication feature values, and sampling the communication feature values with the specified period; and
a step of performing additional learning for over-detection feedback on the anomaly detector by using the communication feature values sampled from each of the clusters.

## Patentansprüche

1. Lernvorrichtung (10), umfassend:
eine Erfassungseinheit (131), die Kommunikationsmerkmalswerte von Kommunikation erfasst, die in einem Anomaliedetektor, der eine Anomalie in Kommunikation detektiert, überdetektiert worden ist, wobei überdetektierte Kommunikation eine Kommunikation ist, die normale Kommunikation ist, welche als anormale Kommunikation detektiert wird;
eine Clustereinheit (132), die die erfassten Kommunikationsmerkmalswerte in eine Vielzahl von Clustern clustert;
eine Stichprobenauswahleinheit (133), die für jedes der Cluster Kommunikationsmerkmalswerte, die zu dem Cluster gehören, in Zeitreihen sortiert, eine Periode der sortierten Kommunikationsmerkmalswerte bestimmt und die Kommunikationsmerkmalswerte mit der bestimmten Periode auswählt; und
eine Lerneinheit (134), die zusätzliches Lernen für Überdetektions-Feedback an dem Anomaliedetektor unter Verwendung der aus jedem der Cluster ausgewählten Kommunikationsmerkmalswerte durchführt.

2. Lernvorrichtung (10) nach Anspruch 1, wobei
die Clustereinheit (132) konfiguriert ist, um:
ein Gaußsches Mischmodell zu verwenden, um die Kommunikationsmerkmalswerte in eine Vielzahl von Clustern zu clustern.

3. Lernvorrichtung nach Anspruch 1, wobei
die Stichprobenauswahleinheit (133) konfiguriert ist, um:
in einem Fall, in dem es nicht möglich war, die Periode der Kommunikationsmerkmalswerte, die zu dem Cluster gehören, zu bestimmen, die Kommunikationsmerkmalswerte zufällig aus den Kommunikationsmerkmalswerten auszuwählen, die zu dem Cluster gehören.

4. Lernvorrichtung nach Anspruch 1, wobei
die Stichprobenauswahleinheit (133) konfiguriert ist, um:
einen Autokorrelationskoeffizienten von jedem der sortierten Kommunikationsmerkmalswerte zu berechnen und die Periode der Kommunikationsmerkmalswerte auf der Grundlage des berechneten Autokorrelationskoeffizienten zu bestimmen.

5. Lernvorrichtung nach Anspruch 1, weiter umfassend:
eine Detektionseinheit, die den Anomaliedetektor nach zusätzlichem Lernen verwendet, um eine Anomalie in eingegebener Kommunikation zu detektieren.

6. Lernverfahren, das durch eine Lernvorrichtung (10) ausgeführt wird, wobei das Lernverfahren umfasst:
einen Schritt des Erfassens von Kommunikationsmerkmalswerten von Kommunikation, die in einem Anomaliedetektor, der eine Anomalie in Kommunikation detektiert, überdetektiert worden ist, wobei überdetektierte Kommunikation eine Kommunikation ist, die normale Kommunikation ist, welche als anormale Kommunikation detektiert wird;
einen Schritt des Clusterns der erfassten Kommunikationsmerkmalswerte in eine Vielzahl von Clustern;
einen Schritt des Sortierens, für jedes der Cluster, von Kommunikationsmerkmalswerten, die zu dem Cluster gehören, in Zeitreihen, des Bestimmens einer Periode der sortierten Kommunikationsmerkmalswerte und des Auswählens der Kommunikationsmerkmalswerte mit der bestimmten Periode; und
einen Schritt des Durchführens von zusätzlichem Lernen für Überdetektions-Feedback an dem Anomaliedetektor unter Verwendung der aus jedem der Cluster ausgewählten Kommunikationsmerkmalswerte.

7. Lernprogramm zum Veranlassen eines Computers zur Ausführung von:
einem Schritt des Erfassens von Kommunikationsmerkmalswerten von Kommunikation, die in einem Anomaliedetektor, der eine Anomalie in Kommunikation detektiert, überdetektiert worden ist, wobei überdetektierte Kommunikation eine Kommunikation ist, die normale Kommunikation ist, welche als anormale Kommunikation detektiert wird;
einem Schritt des Clusterns der erfassten Kommunikationsmerkmalswerte in eine Vielzahl von Clustern;
einem Schritt des Sortierens, für jedes der Cluster, von Kommunikationsmerkmalswerten, die zu dem Cluster gehören, in Zeitreihen, des Bestimmens einer Periode der sortierten Kommunikationsmerkmalswerte und des Auswählens der Kommunikationsmerkmalswerte mit der bestimmten Periode; und
einem Schritt des Durchführens von zusätzlichem Lernen für Überdetektions-Feedback an dem Anomaliedetektor unter Verwendung der aus jedem der Cluster ausgewählten Kommunikationsmerkmalswerte.

## Revendications

1. Dispositif d'apprentissage (10) comprenant :
une unité d'acquisition (131), qui acquiert des valeurs de caractéristiques de communication d'une communication surdétectée dans un détecteur d'anomalie qui détecte une anomalie dans une communication, dans lequel la communication surdétectée est une communication qui est une communication normale qui est détectée comme étant une communication anormale ;
une unité de regroupement (132), qui regroupe en une pluralité de cluster les valeurs de caractéristiques de communication acquises ;
une unité d'échantillonnage (133), qui trie, pour chacun des clusters, des valeurs de caractéristiques de communication appartenant au cluster en série temporelle, spécifie une période des valeurs de caractéristiques de communication triées, et échantillonne les valeurs de caractéristiques de communication avec la période spécifiée ; et
une unité d'apprentissage (134), qui effectue un apprentissage supplémentaire pour un retour d'information de surdétection sur le détecteur d'anomalie en utilisant les valeurs de caractéristiques de communication échantillonnées à partir de chacun des clusters.

2. Dispositif d'apprentissage (10) selon la revendication 1, dans lequel
l'unité de regroupement (132) est configurée pour :
utiliser un modèle de mélange gaussien pour regrouper les valeurs de caractéristiques de communication en une pluralité de clusters.

3. Dispositif d'apprentissage selon la revendication 1, dans lequel
l'unité d'échantillonnage (133) est configurée pour :
échantillonner aléatoirement les valeurs de caractéristiques de communication à partir des valeurs de caractéristiques de communication appartenant au cluster dans le cas où il n'a pas été possible de spécifier la période des valeurs de caractéristiques de communication appartenant au cluster.

4. Dispositif d'apprentissage selon la revendication 1, dans lequel
l'unité d'échantillonnage (133) est configurée pour :
calculer un coefficient d'autocorrélation de chacune des valeurs de caractéristiques de communication triées, et spécifier la période des valeurs de caractéristiques de communication sur la base du coefficient d'autocorrélation calculé.

5. Dispositif d'apprentissage selon la revendication 1, comprenant en outre :
une unité de détection qui, en utilisant le détecteur d'anomalie après l'apprentissage supplémentaire, détecte une anomalie dans une communication qui a été reçue en entrée.

6. Procédé d'apprentissage mis en œuvre par un dispositif d'apprentissage (10), le procédé d'apprentissage comprenant :
une étape consistant à acquérir des valeurs de caractéristiques de communication d'une communication surdétectée dans un détecteur d'anomalie qui détecte une anomalie dans une communication, dans lequel la communication surdétectée est une communication qui est une communication normale qui est détectée comme étant une communication anormale ;
une étape consistant à regrouper en une pluralité de clusters les valeurs de caractéristiques de communication acquises ;
une étape consistant à trier, pour chacun des clusters, des valeurs de caractéristiques de communication appartenant au cluster en série temporelle, à spécifier une période des valeurs de caractéristiques de communication triées, et à échantillonner les valeurs de caractéristiques de communication avec la période spécifiée ; et
une étape consistant à effectuer un apprentissage supplémentaire pour un retour d'information de surdétection sur le détecteur d'anomalie en utilisant les valeurs de caractéristiques de communication échantillonnées à partir de chacun des clusters.

7. Programme d'apprentissage pour amener un ordinateur à mettre en œuvre :
une étape consistant à acquérir des valeurs de caractéristiques de communication d'une communication surdétectée dans un détecteur d'anomalie qui détecte une anomalie dans une communication, dans lequel la communication surdétectée est une communication qui est une communication normale qui est détectée comme étant une communication anormale ;
une étape consistant à regrouper en une pluralité de clusters les valeurs de caractéristiques de communication acquises ;
une étape consistant à trier, pour chacun des clusters, des valeurs de caractéristiques de communication appartenant au cluster en série temporelle, à spécifier une période des valeurs de caractéristiques de communication triées, et à échantillonner les valeurs de caractéristiques de communication avec la période spécifiée ; et
une étape consistant à effectuer un apprentissage supplémentaire pour un retour d'information de surdétection sur le détecteur d'anomalie en utilisant les valeurs de caractéristiques de communication échantillonnées à partir de chacun des clusters.
